**Europäisches Patentamt**

**European Patent Office**

**Office européen des brevets**

(11) Veröffentlichungsnummer : **0 614 196 A1**

(12) # EUROPÄISCHE PATENTANMELDUNG

(21) Anmeldenummer : **94810050.8**

(22) Anmeldetag : **01.02.94**

(51) Int. Cl.$^5$ : **G21F 9/00,** G21F 9/30, C04B 41/53

(30) Priorität : **01.03.93 CH 608/93**

(43) Veröffentlichungstag der Anmeldung :
**07.09.94 Patentblatt 94/36**

(84) Benannte Vertragsstaaten :
**BE DE FR GB**

(71) Anmelder : **DECO-HANULIK AG**
**Pilatusstrasse 7**
**CH-8032 Zürich (CH)**

(72) Erfinder : **Hanulik, Jozef**
**Pilatusstrasse 7**
**Ch-8032 (CH)**

(74) Vertreter : **Feldmann, Clarence Paul et al**
**c/o Patentanwaltsbüro FELDMANN AG**
**Postfach**
**Kanalstrasse 17**
**CH-8152 Glattbrugg (CH)**

(54) **Verfahren zur Reinigung kontaminierter Oberflächen aus mineralischen Materialien, sowie Vorrichtung zur Durchführung des Verfahrens.**

(57) Die kontaminierten Betonböden oder Wände beziehungsweise Ziegelsteinmauern werden vorerst von Staub und losen Partikeln mittels einem Staubsauger gereinigt. Anschliessend wird mittels einem Pinsel oder Roller oder mittels einem Zerstäuber verdünnte Phosphorsäure in einer Konzentration von vorzugsweise 5% auf die zu dekontaminierende Fläche aufgetragen. Während einer Zeit von cirka 5-10 Minuten reagiert die Phosphorsäure mit der kalziumhaltigen Unterlage unter Bildung eines Schaumes, der im wesentlichen aus Wasser, mobilen Partikeln und Tri-Kalziumphosphaten besteht.

Mittels einer Vorrichtung werden die gelösten und in der mobilen Phase gehaltenen Kontaminanten abgebürstet und gleichzeitig abgesaugt.

FIG. 1

EP 0 614 196 A1

Die vorliegende Erfindung betrifft ein Verfahren zur Reinigung kontaminierter Oberflächen aus mineralischen Materialien, insbesondere Betonflächen und Mauerwerke, mittels einem säurehaltigen Reinigungsmittel. Obwohl im Vordergrund die Anwendung des Verfahrens auf radioaktiv kontaminierten Oberflächen steht, ist dieses Verfahren jedoch generell geeignet, kontaminierte Oberflächen aus mineralischen Materialien zu dekontaminieren, falls sich dies durch Abtragung einer kontaminierten Schicht lösen lässt. Insbesondere wird hier an Mauerwerke und Bodenflächen in und um Reaktorgebäude gedacht, jedoch kommen auch Wände oder Böden in Frage, die pcb-kontaminiert sind, oder einfach auch mit Farbschmierereien verunstaltete Betonwände oder Mauerwerke.

Bekannt ist ein Verfahren zur Reinigung von radioaktiven Oberflächen von Werkstoffen auf der Basis von Zement oder Beton und von Mauerwerken, das darin besteht, dass man die verseuchten Stellen mechanisch abträgt, indem man maschinell die Oberfläche abschleift oder abklopft. Hierzu wird insbesondere auf die Publikation "Strahlenschutzaspekte bei radioaktiven Kontaminationen" von A. Etzweiler et al. verwiesen, erschienen anlässlich der 17. Jahrestagung des Fachverbandes für Strahlenschutz e.V. vom 08.06.1983 bis 10.06.1983 in Aachen. Solche vollständig trockene, rein mechanische Reinigungsverfahren bewirken eine grosse Staubentwicklung und der apparative Aufwand ist relativ gross, da die entsprechenden Abrasionskräfte einwirken müssen. Die Abtragungstiefe ist zusätzlich relativ gering.

Der Einsatz von wässrigen Mitteln zur Reinigung von verunreinigten Oberflächen ist selbstverständlich bezüglich metallischen Werkstoffen ebenfalls längstens bekannt. Hier sei insbesondere auch auf die GB-A-891'670 verwiesen, bei der radioaktiv kontaminierte Oberfläche metallischer Werkstoffe mittels mindestens einer wässrigen Lösung mit einer Säure aus der Gruppe Fluoroborsäure, Hexafluorkieselsäure und Flussäure in freier Form oder als wasserlössliches Salz verwendet wird. Bei jenem Verfahren werden die kontaminierten Oberflächen vollständig in ein Bad mit dem wässrigen Mittel eingetaucht. Bei einem solchen Reinigungsverfahren ist der Reinigungsgrad völlig ungenügend, da radioaktive Stoffe durch die mobile, flüssige Phase ins Innere des Werkstoffes transportiert werden können.

Eine wesentliche Verbesserung ist schliesslich aus der Sowjetischen Patentschrift 1'443'819 vom 01.12.1988 bekannt geworden, indem hier vorgeschlagen wird, ein wässriges Mittel, das mindestens eine Säure aus der Gruppe Fluorborsäure und Hexafluor-Kieselsäure in reiner Form oder als wasserlösliches Salz enthält, zu verwenden, wobei der wässrigen Lösung zusätzlich eine oberflächenaktive Substanz, ein Netzmittel, ein Schaumstabilisator und ein Wasserpermeabilitätsinhibitor beigegeben wurde. Diese Mischung wurde auf eine Beton- oder Ziegelsteinfläche aufgetragen und nach einer bestimmten Reaktionszeit wieder abgekratzt. Das Mittel, das eine pastöse Form hat, reagiert unter Blasenbildung. Der eigentliche Reaktionsprozess kommt relativ bald zum Erliegen, da relativ schnell eine Auftrocknung des pastösen Mittels erfolgt. Um eine optimale Wirkungsweise des pastösen Mittels zu erreichen, wäre es erforderlich, das Mittel mittels Stahlbürsten auf der Fläche zu verreiben. Es hat sich jedoch gezeigt, dass dies nicht durchführbar ist, da bei der mechanischen Bearbeitung der Oberfläche eine erhebliche Reibungswärme und sogar Funkenbildung auftritt, so dass zumindest punktuell Temperaturen von weit über 100° Celsius entstehen. Bekanntlich ist die Fluoroborsäure $HBF_4$ nur bei Temperaturen bis maximal 120° Celsius stabil. Bei den hier jedoch zumindest punktuell auftretenden Temperaturen von über 120° Celsius hat sich die Fluoroborsäure in die Komponenten HF und $BF_3$ zersetzt. Beide Komponenten haben tiefe Siedepunkte, so dass die entsprechenden Dämpfe entstehen. Die Gase der beiden Komponenten sind äusserst toxisch und gehören in der Schweiz der Giftklasse 1 an. Folglich müssten bei der Arbeit extreme Vorsichtsmassnahmen getroffen werden. Ein weiteres Problem der HF- und $BF_3$ Dämpfe ist deren extrem korrosive Wirkung auf sämtliche Metalle. Elektrische Motoren sowie elektronische Anlagen würden durch die Anwesenheit dieser Dämpfe innerhalb kürzester Zeit Schaden nehmen.

Auf Grund dieser Beobachtung besteht somit die Aufgabe der vorliegenden Erfindung, das bekannte Verfahren mit einer intensiven mechanischen Bearbeitung der kontaminierten Oberfläche zu verbessern, unter Vermeidung der Nachteile der bekannten Verfahren.

Die Erfindung schafft ferner eine Vorrichtung mittels der, das erfindungsgemässe Verfahren optimal durchführbar ist. Die erstgenannte Aufgabe löst ein Verfahren mit den Merkmalen des Patentanspruches 1. Weitere vorteilhafte Varianten dieses Verfahrens gehen aus den abhängigen Patentansprüchen 2 - 5 hervor. Die bevorzugte Ausführungsform der Vorrichtung, in Form eines Mittels zur Durchführung des Verfahrens nach Anspruch 1, geht aus dem Anspruch 6 hervor. Weitere vorteilhafte Ausbildungsformen des Mittels zur Durchführung des Verfahrens gehen aus den nachfolgenden abhängigen Ansprüchen hervor.

In der Zeichnung ist ein Ausführungsbeispiel einer Vorrichtung zur Durchführung des Verfahrens dargestellt und anhand der nachfolgenden Beschreibung im Zusammenhang mit dem erfindungsgemässen Verfahren erläutert. Es zeigt:

Figur 1     einen Vertikalschnitt durch die Vorrichtung entlang der Linie A-A gemäss Figur 2 und
Figur 2     eine Aufsicht auf das Gerät von unten in vereinfachter Darstellung.

Vor der eigentlichen Dekontamination ist es wichtig, die kontaminierte Fläche von losen Partikeln und Staub zu reinigen. Dies erfolgt am einfachsten mittels einem industriellen Staubsauger, der als Nassauger eingesetzt werden kann. Diese Reinigung ist insbesondere wichtig, um sicherzustellen, dass das nachfolgend aufzutragende Reinigungsmittel tatsächlich auch mit der zu dekontaminierenden Oberfläche in Berührung kommt. Da im späteren Verlauf des Reinigungsverfahrens ohnehin noch ein entsprechender Industriestaubsauger benötigt wird, stellt dies keine zusätzliche apparative Belastung des Reinigungsverfahrens dar.

In einem nächsten Schritt wird die kontaminierte Oberfläche mit dem Reinigungsmittel, der Phosphorsäure, in Verbindung gebracht. Am sinnvollsten erfolgt dieser Auftrag mittels einem Pinsel, einem Farbroller oder einem Schwamm. All diese Hilfsmittel sind aus säurebeständigen Materialien erhältlich. Letztlich lässt sich aber das Reinigungsmittel auch einfach aufsprühen. All diese Auftragungsmethoden sind möglich, da das Reinigungsmittel äusserst dünnflüssig sein kann und vorzugsweise auch dünnflüssig ist. Als optimale Zusammensetzung des Reinigungsmittels hat sich erwiesen, dass man vorzugsweise eine rein wässrige Phosphorsäurelösung (Giftklasse 3-4) mit einer Konzentration von ungefähr 5 Vol.% verwendet ohne irgendwelche zusätzlich den Prozess belastende Stoffe. Nach der Auftragung der Phosphorsäure als Reinigungsmittel wird man ungefähr 5-10 Minuten warten. Während dieser Zeit laufen die an sich bekannten Reaktionen ab, wobei die Kohlendioxidbildung zur Schaumbildung führt. Die Schaumbildung ermöglicht folglich eine optische Kontrolle über den Prozessablauf. Die Betonfläche oder das Mauerwerk liefern die Kalziumionen.

$$Ca^2 + H_3PO_4 \longrightarrow Ca_3(PO_4)_2 \qquad \text{(qualitativ)}$$

Der auf dem Mauerwerk, beziehungsweise dem Betonboden entstehende schaumige Schlamm besteht folglich im wesentlichen aus Tri-Kalzium-Phosphat, Wasser und $CO_2$. Die Verwendung der Phosphorsäure in relativ schwacher Konzentration soll dazu führen, dass die Säure stöchiometrisch vollständig abgebaut wird.

Nachdem man folglich die Reaktionszeit abgewartet hat und die Schaumbildung folglich zum Erliegen gekommen ist, wird nun die entsprechende Oberfläche mittels einem speziell hierzu entwickelten Gerät gereinigt. Mittels dem Gerät wird die Oberfläche mit Hilfe von Bürsten geschrubbt, so dass sämtliche lose Teile sich mit dem Schlamm vermischen. Dieser feuchte Schlamm wird nun über einen Ansaugstutzen mittels dem bereits genannten Sauger abgesogen. Gleichzeitig wird man jedoch zusätzlich Wasser in den Bürstbereich sprühen, um die gereinigte Fläche einerseits zu benetzen, vorallem aber, weil das Wasser ein Transportmedium für die gelösten und mobilen Kontaminanten bildet. Die Zuführung von Wasser ermöglicht zudem noch den vollständigen Abbau der eventuellen noch vorhandenen Säurenreste. Handelt es sich bei der kontaminierten Oberfläche um radioaktiv kontaminierte Flächen, so lässt sich der abgebürstete und abgesaugte Tri-Kalzium-Phosphatschlamm mittels $Ca(OH)_2$ neutralisieren und anschliessend mit Zement verfestigen. Die so gebildete nuklear zu entsorgende Abfallmenge ist optimal reduziert und die eventuell verbleibende Restkalziumphosphate sind bezüglich dem Beton absolut neutral.

Ein gewisses Problem bildet bei diesem Verfahren, dass es wesentlich ist, dass die gesamte kontaminierte Fläche überall und möglichst gleichmässig abgetragen wird. Dies verlangt eine gleichmässige Auftragung der verdünnten Phosphorsäure und eine anschliessende vollständige Reinigung der reagierten Oberflächen. Um die flächendeckende Reinigung der reagierten Oberfläche zu gewährleisten, wird mittels dem bereits kurz erwähnten speziellen Gerät Wasser aufgesprüht. Dies führt zu einer Benetzung der Betonfläche und entsprechend optisch zu einer dunkleren Oberfläche, die es somit gestattet festzustellen, ob die gesamte Oberfläche vollständig gereinigt wurde. Sehr viel einfacher ist es, wenn der Beton bereits einen farbigen Schutzanstrich aufweist. Solche in Reaktoren oftmals vorhandenen Schutzanstriche bestehen aus Zementfarben, die den Prozess in keiner Weise stören und auch zu keinen unerwünschten Bindungen im abzutragenden Schlamm führen. Ist ein solcher farbiger Schutzanstrich jedoch nicht vorhanden, so hat es sich als besonders vorteilhaft erwiesen, wenn nach der Staubreinigung die Oberfläche vorerst eingefärbt wird. Hierbei haben sich zwei Methoden als besonders einfach, preiswert und schnell realisierbar erwiesen. Eine Methode besteht darin, die Betonwand vor der Bestreichung mit der verdünnten Phosphorsäure mit farbiger Kreide anzumalen. Der folglich sich bildende Schlamm ist sofort erkennbar, falls er bei der nachfolgenden Bürst- und Saugreinigung nicht vollständig entfernt worden ist. Eine letzte Möglichkeit besteht schliesslich darin, die verdünnte Phosphorsäure selber einzufärben. Dies hat den doppelten Vorteil, dass erstens auch die flächendeckende Auftragung des Reinigungsmittels optisch erkennbar ist und zweitens die Einfärbung selber nicht einen zusätzlichen Arbeitsgang darstellt. Für diesen Zweck besonders geeignet sind verschiedene wasserlösliche Lebensmittelfarben.

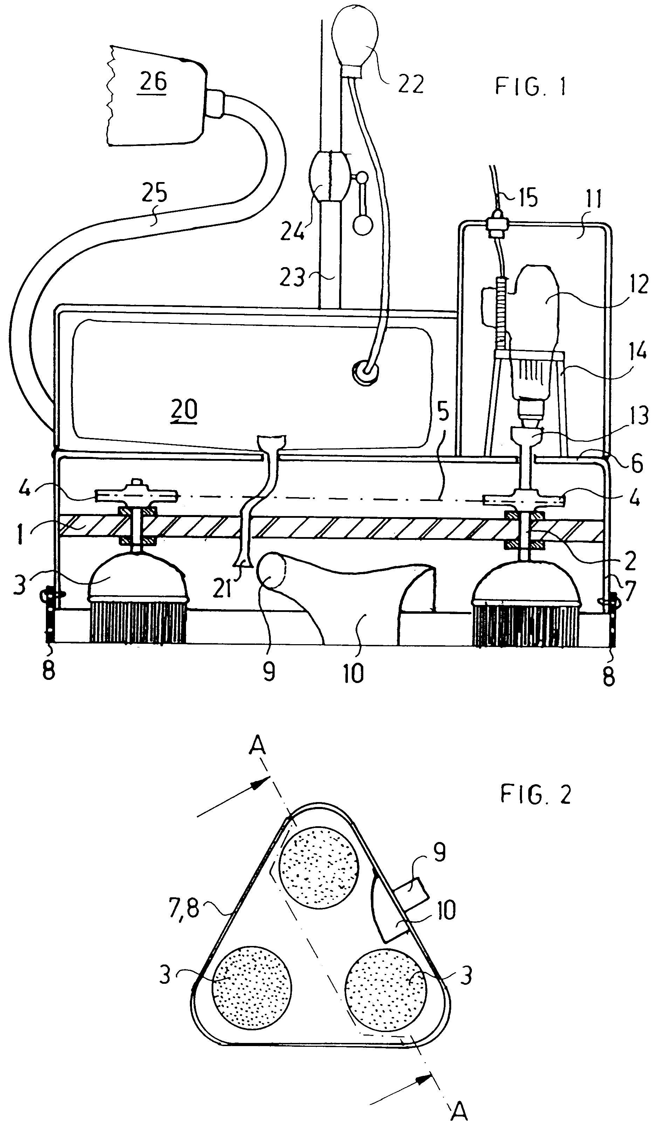

Die ebenfalls erfindungsgemässe, bevorzugte Ausführungsform eines Mittels zur Durchführung des Verfahrens nach Anspruch 1 ist in den Figuren 1 und 2 dargestellt. Bei der Realisierung des Gerätes mussten insbesondere zwei Punkte berücksichtigt werden, nämlich einerseits der Schutz der Teile gegen die doch relativ agressive saure Umgebung und andererseits den Aufbau des Gerätes auf eine derartige Weise, dass die sich radioaktiv kontaminierenden Teile sich auf ein Minimum beschränken, beziehungsweise so reinigbar sind, dass während eines Transportes keinerlei Staubkontamination erfolgen kann. Hierbei stellt der Antrieb und das Getriebe ein nicht unwesentliches Problem dar. Zum einen sind Elektromotoren mit entsprechenden Getrieben sowie elektronischer Regelung relativ teuer. Will man das Gerät zudem nach Beendigung einer Reinigungsarbeit an einen anderen Ort verbringen, so lässt sich das gesamte Gerät mit Ausnahme des Antriebes selber vollständig dekontaminieren, indem die auswechselbaren Bürsten entfernt und die kontaminierten Zahnräder ausgetauscht werden. Der Elektromotor und das Getriebe liessen sich jedoch nicht dekontaminieren oder freimessen. Daher wird bevorzugt dieser Teil durch eine handelsübliche Bohrmaschine realisiert. Die Elektrobohrmaschine lässt sich nun einfach aus dem Gerät ausspannen und für andere Anwendungszwecke innerhalb des Reaktorgebäudes wieder verwenden. Die definitive Entsorgung muss dann erst erfolgen, wenn die Bohrmaschine ausgedient oder die maximal zulässige Radioaktivität erreicht hat.

Der gesamte Aufbau des Gerätes erfolgt auf einer Kunststoffplatte 1, die die Grundplatte des Gerätes darstellt. In dieser Grundplatte 1 sind drei Wellen 2 dichtend gelagert. Auf den Wellen 2 sind auswechselbar befestigt Stahlbürsten 3 angeordnet. Oberhalb der Kunststoffplatte 1 sind auf den Wellen 2 austauschbare Ritzel 4 befestigt, die über eine gemeinsame Antriebskette 5 miteinander in Wirkverbindung stehen. Die im Grundriss etwa dreieckige Kunststoffplatte 1 wird von einem Gehäuse 6 mit einer vertikalen Mantelwand 7 umgeben. Die Grundplatte 1 unterteilt somit den Raum innerhalb des Gehäuses 6 etwa horizontal in zwei Bereiche, nämlich einem Trockenteil, in dem die Transmission angeordnet ist, sowie einem Feuchtteil unterhalb der Grundplatte 1, in dem die Bürsten 3 lagern. Das Gehäuse 6, welches vorzugsweise aus einem glasverstärkten Polyester gefertigt ist, weist am unteren Ende der umlaufenden Mantelwand 7 eine Gummischürze 8 auf, welche einerseits als Spritzschutz und andererseits zur Dichtung des Raumes unterhalb der Grundplatte 1 dient, so dass die erforderliche Absaugung vorgenommen werden kann. Hierzu ist in der Mantelwand 7 ein ihn durchsetzender Stutzen 9 vorgesehen, welcher mit einer speziellen tunnelartig geformten Einsaugmündung 10 in Wirkverbindung steht. Diese Einsaugmündung 10 ist so auf eine der drei Bürsten 3 ausgerichtet, dass diese tangential zur Einsaugmündung 10 hinarbeitet.

Mindestens eine der Antriebswellen 2 durchsetzt das entsprechende Ritzel 4 und erstreckt sich durch das Gehäuse 6 hindurch in einen darüber liegenden zweiten Gehäuseteil, ein Motorengehäuse 11. In diesem Motorengehäuse 11 ist eine handelsübliche Bohrmaschine 12 mit entsprechend integriertem Getriebe und elektronischer Tourenzahlsteuerung angeordnet. Die Bohrmaschine 11 ist mittels einer einfachen Steckkupplung 13 mit einer der Antriebswellen 2 in Wirkverbindung. Die Montage der Bohrmaschine 12 kann mittels einem einfachen Stativ 14 erfolgen, welches entweder auf dem Gehäuse 6 oder dieses durchdringend auf der Grundplatte 1 montiert ist. Zur Steuerung der Bohrmaschine 14 wird lediglich ein Baudenzug 15 benötigt, der das Motorengehäuse 11 durchsetzt. Auf dem Gehäuse 6 ist des weiteren ein Wassertank 20 fixierbar gelagert, aus dem über eine Zerstäuberdüse 21 unterhalb der Kunststoffplatte 1 Wasser auf die zu bearbeitende Fläche gesprüht werden kann. Die für die Sprühfunktion erforderliche Druckluft lässt sich in einfachster Form mittels einem Blasebalg 22 realisieren. Selbstverständlich kommen diverse andere Arten der Wasserzuführung ebenfalls in Frage. Beispielsweise braucht das Wasser auch nicht unbedingt zerstäubt zu werden, sondern kann auch kontinuierlich aus dem Tank auf die Bearbeitungsfläche tropfen. Wird mehr Wasser benötigt, so muss lediglich die Verschiebegeschwindigkeit des Gerätes auf der zu bearbeitenden Fläche reduziert werden. Das gesamte Gerät lässt sich über eine Deichselstange 23, die ebenfalls wiederum fest an der Kunststoffplatte 1 montiert ist, beliebig verschieben. Der Neigungswinkel der Deichselstange 23 zum Gerät lässt sich mittels einem entsprechenden Gelenk 24 verstellen.

An den Stutzen 9 des Gerätes wird ein Nassaugerschlauch 25 ahngeschlossen, der vorzugsweise mit einem Industrienassauger in Verbindung steht. Auch hier wird wiederum aus entsorgungstechnischen Gründen die Absaugung nicht mit einem integrierten Sauger realisiert.

Neben der hier dargestellten Lösung mit drei Bürsten, sind selbstverständlich auch grössere Geräte mit mehr Bürsten denkbar. Für die Anwendung bei der Reinigung von vertikalen Flächen wird jedoch eine Ausführung mit lediglich zwei gegenläufig getriebenen Bürsten bevorzugt. Dies führt zu einer leichteren und einfacheren Konstruktion. Der prinzipielle Aufbau bleibt jedoch erhalten. Das ungewöhnliche an der vorliegenden erfindungsgemässen Vorrichtung besteht jedoch in der leichten Austauschbarkeit aller Bestandteile und der klaren Abtrennung zwischen Nassreinigungsteil und Trockenbereich. Dies ermöglicht es, das Gerät nach Durchführung einer Reinigung in mehreren sukzessiven Bädern problemlos auch selber wieder zu dekontaminieren.

Letztlich sei nochmals darauf hingewisen, dass sowohl das Verfahren wie auch die Vorrichtung vorwiegend für die Dekontamination von radioaktiv kontaminierten Oberflächen konzipiert, doch keineswegs allein für diesen Zweck einsetzbar sind. Insbesondere ist das Gerät sicherlich auch anwendbar bei einer pcb-Kontamination, wie sie bei defekten Hochleistungstransformatoren innerhalb von Transformatorengebäuden vorkommen können. Letztlich ist aber die Anwendung sowohl der Vorrichtung als auch des Verfahrens für die Reinigung von Betonwänden oder Böden, die mit Graffitis beschmiert sind, geeignet.

4

**Patentansprüche**

1. Verfahren zur Reinigung kontaminierter Oberflächen aus mineralischen Materialien, insbesondere Betonflächen und Mauerwerke, mittels einem säurehaltigen Reinigungsmittel, gekennzeichnet durch mindestens einen Reinigungszyklus der nachfolgenden Schritte:
   - Auftragen einer wässrigen Phosphorsäurelösung, mit einer bevorzugten Konzentration von weniger als 25% Vol. auf die zuvor trocken staubgereinigten Oberflächen;
   - nach einer Reaktionszeit unter Bildung von Schaum, die zu reinigende Oberfläche mechanisch abrasiv bearbeitet, während man gleichzeitig die erforderliche Benetzung der zu bearbeitenden Oberfläche optisch kontrolliert und nachregelt;
   - dass der sich gebildete Schaum, der die kontaminierten Oberflächenpartikel beinhaltet, abgesaugt wird, worauf die vorgenannten Schritte gegebenenfalls wiederholt werden.

2. Verfahren nach Anspruch 1, dadurch gekennzeichnet, dass nach jedem Reinigungszyklus eine Messung der Restkontamination vorgenommen wird.

3. Verfahren nach Anspruch 1, dadurch gekennzeichnet, dass die zu reinigende Oberfläche, vor der Durchführung jedes Reinigungszyklus, jeweils mit einem farblich erkennbaren Auftrag versehen wird.

4. Verfahren nach Anspruch 3, dadurch gekennzeichnet, dass der Kontrollauftrag mittels farbiger Kreide erfolgt.

5. Verfahren nach Anspruch 1, dadurch gekennzeichnet, dass man der wässrigen Phosphorsäurelösung einen Farbstoff beimischt.

6. Mittel zur Durchführung des Verfahrens nach Anspruch 1, bestehend aus einem Gerät mit mindestens zwei gegenläufig rotierenden Abrasionsmitteln, die in einer Kunststoffplatte gelagert sind und mittels einem tourenzahlregelbaren Motor getrieben sind, wobei die Kunststoffplatte mit einer umlaufenden, dichtenden Kunststoffschürze versehen ist, und dass ein Absaugstutzen vorgesehen ist, an dem ein Sauger anschliessbar ist.

7. Mittel zur Durchführung des Verfahrens nach Anspruch 5, dadurch gekennzeichnet, dass das Gerät einen Tank zur Aufnahme und Mittel zur dosierten Abgabe von Wasser zur Benetzung aufweist.

8. Mittel zur Durchführung des Verfahrens nach Anspruch 5, dadurch gekennzeichnet, dass der Antrieb aus einer handelsüblichen am Gerät fest montierbaren Elektrobohrmaschine besteht, deren Futter direkt oder über ein Kupplungsstück auf eine Antriebswelle wirkt.

9. Mittel zur Durchführung des Verfahrens nach Anspruch 5, dadurch gekennzeichnet, dass die Antriebswellen beziehungsweise Lagerachsen der als Abrasionsmittel dienenden drehbaren Bürsten wasserdicht in der Kunststoffplatte gelagert sind.

10. Mittel zur Durchführung des Verfahrens nach Anspruch 5, dadurch gekennzeichnet, dass vorzugsweise sämtliche Geräteteile exklusive dem Antriebsmotor aus Kunststoff gefertigt sind.

11. Mittel zur Durchführung des Verfahrens nach Anspruch 5, dadurch gekennzeichnet, dass die umlaufende Kunststoffschürze höhenverstellbar bezüglich der Kunststoffplatte angeordnet ist.

FIG. 1

FIG. 2

EP 0 614 196 A1

**Europäisches Patentamt**

# EUROPÄISCHER RECHERCHENBERICHT

Nummer der Anmeldung

EP 94 81 0050

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y,D | WO-A-86 07184 (HANULIK)<br>* Zusammenfassung; Ansprüche 1-6; Abbildung 1 *<br>--- | 1-9 | G21F9/00<br>G21F9/30<br>C04B41/53 |
| Y | US-A-2 529 549 (HALPERN)<br>* Ansprüche 1-4 *<br>* Spalte 3, Zeile 37 - Zeile 60 *<br>--- | 1-9 | |
| A | CH-A-496 633 (FIRMA DAVID BOENIGER)<br>* Ansprüche 1,2 *<br>* Spalte 1, Zeile 36 - Spalte 2, Zeile 12 *<br>--- | 1-9 | |
| A | DATABASE WPI<br>Section Ch, Week 9311,<br>Derwent Publications Ltd., London, GB;<br>Class A97, AN 93-091742<br>& SU-A-1 723 200 (KIEV SECT TEKHENERGOKHIMPROM ASSOC (ROVN=) ROVNENO AZOT PRODN ) 30. März 1992<br>* Zusammenfassung *<br>--- | 1-9 | |
| A | DATABASE WPI<br>Section Ch, Week 7845,<br>Derwent Publications Ltd., London, GB;<br>Class E37, AN 78-80973A<br>& JP-A-53 113 227 (KOBAYASHI M) 3. Oktober 1978<br>* Zusammenfassung *<br>----- | 1-9 | **RECHERCHIERTE SACHGEBIETE (Int.Cl.5)**<br>G21F<br>C04B |

Der vorliegende Recherchenbericht wurde für alle Patentansprüche erstellt

| Recherchenort | Abschlußdatum der Recherche | Prüfer |
|---|---|---|
| DEN HAAG | 3. Juni 1994 | Nicolas, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C01)

7